# EUROPÄISCHE PATENTSCHRIFT

(11) **EP 1 339 817 B1**
(45) Veröffentlichungstag und Bekanntmachung des Hinweises auf die Patenterteilung: **13.06.2007**
(21) Anmeldenummer: 01999622.2
(22) Anmeldetag: 29.11.2001
(51) Int. Cl.: C11C 3/00, C10L 1/18, C11C 3/04

(54) **VERFAHREN ZUR HERSTELLUNG VON FETTSAÜREESTERN**
METHOD FOR THE PRODUCTION OF FATTY ACID ESTERS
PROCEDE DE PRODUCTION D'ESTERS D'ACIDES GRAS

(30) Priorität: 04.12.2000 DE 10060329; 20.12.2000 DE 10063967; 17.08.2001 DE 10139422
(43) Veröffentlichungstag der Anmeldung: 03.09.2003
(73) Patentinhaber: Westfalia Separator AG, 59302 Oelde (DE)
(72) Erfinder: BRUNNER, Karlheinz, 63538 Grosskrotzenburg (DE); FRISCHE, Rainer, 60529 Frankfurt (DE); RICKER, Rainer, D-63128 Dietzenbach (DE)
(74) Vertreter: Grünberg, Thomas
(86) Internationale Anmeldenummer: PCT/EP2001/013957
(87) Internationale Veröffentlichungsnummer: WO 2002/046340

(56) Entgegenhaltungen:
- EP-A- 0 131 991
- DE-A- 4 228 476
- US-A- 2 383 601
- US-A- 4 164 506

## Beschreibung

Die Erfindung betrifft Verfahren zur Herstellung von Fettsäureestern primärer und sekundärer Alkohole aus rohen, ungereinigten, freie Fettsäuren und Schleimstoffe enthaltenden Ölen und Fetten unter Anwendung einer alkalisch katalysierten Umesterung mit Bildung einer abtrennbaren Glycerinphase und einer vorgeschalteten sauer katalysierten Veresterung freier Fettsäuren. Mit anderen Worten betrifft die Erfindung ein Verfahren zur Herstellung von sogenanntem Bio-Diesel wie RME (Rapsmethyester). In der Erfindung lassen sich außer den bestim-mungsgemäß gewonnenen nativen Ölen und Fetten auch Altöle der Ernährungsindustrie einsetzen, die neben einem erhöhten Gehalt an freien Fettsäuren diverse andere Verunreinigungen wie Proteinrückstände, Verbrennungs- und Bratrückstände, wie sie bei ausgemusterten Frittierölen anfallen, enthalten.

Bei der basisch oder alkalisch katalysierten Umesterungsreaktion wird Glycerin-Fettsäureester in Form von Mono-, Di- und Tri-Estern mit einem Alkali-Hydroxid oder einem Alkali-Alkoholat in Anwesenheit von geringfügig höheren als stöchiometrischen Mengen an primären Alkoholen (10% bis 50% Überschuß) bei erhöhter Temperatur von ca.30° bis 60°C nahezu vollständig unter Abspaltung und Abscheidung von Glycerin zu den Fettsäureestern des primären oder sekundären, kurzkettigen (Kettenlänge von C1 bis C4) Alkohols umgesetzt.

Bekannt ist, daß diese Reaktion dadurch beschleunigt werden kann, daß das sich abscheidende Glycerin durch technische Maßnahmen z.B. durch Zentrifugieren mit Separatoren aus der Reaktionslösung entfernt wird.

Native Öle enthalten jedoch stets einen mehr oder weniger hohen Gehalt an freien Fettsäuren, die bei der obigen Reaktion nicht zu Fettsäureestern umgesetzt werden und mit dem zugesetzten basischen Katalysator zu Seifen reagieren. Selbst qualitativ hochwertige, schonend gewonnene, nicht raffinierte Preß- und Lösemittelextraktionsöle und -fette können Gehalte an freien Fettsäuren von 1 Gew.% bis 3,5 Gew.% enthalten. Die direkte Umesterung dieser Öle ist zwar möglich, es werden aber entsprechend höhere Katalysatormengen benötigt als bei Ölen ohne freie Fettsäuren. Ein Teil des Katalysators wird dabei für die Neutralisation der freien Fettsäuren unter Bildung von Seifen verbraucht, wobei diese Seifen mit dem sich bildendem Glycerin abgeschieden werden.

Zur Verringerung der erforderlichen Katalysatormenge und von Ausbeuteverlusten wird z.B. die direkte Umesterung von nativen Ölen mehrstufig durchgeführt, wobei in der ersten Stufe gerade soviel Katalysator zugesetzt wird, daß sich die freien Fettsäuren unter Verbrauch von Katalysator vollständig zu Seifen umsetzen und ein geringfügiger Überschuß an Katalysator eine Teilumesterung mit Abscheidung von Glycerin bewirkt. In dieser Glycerinteilmenge lösen sich dabei die gebildeten Seifen und können mit dem Glycerin weitgehend abgetrennt werden. In der folgenden Reaktionsstufe wird dann frischer Katalysator zugesetzt, der dann nicht mehr von freien Fettsäuren zerstört werden kann.

Außer freien Fettsäuren enthalten rohe Preß- bzw. Lösemittelextraktionsöle und -fette, insbesondere auch heiß gepreßte Öle, stets Schleimstoffe, die schwer zerstörbare Emulsionen, z.B. Öl/Wasser- bzw. Glycerin/Wasser- und Glycerin/Öl-Emulsionen, bilden. Dies sind im wesentlichen wasserquellbare Schleimstoffe, z.B. Lecithin (Phosphatide), und die nicht wasserquellbaren Schleimstoffe in Form anderer phosphorhaltiger Verbindungen. Hierdurch wird eine saubere Phasentrennung z.B. zwischen Glycerin und gebildetem Fettsäureester verhindert. Ferner wird auch das zum Entfernen von Glycerinester notwendige Waschen des erzeugten Fettsäureesters mit Wasser durch die Emulsionen behindert. Die von Schleim-stoffen resultierenden Verluste sind schwer kalkulierbar, sie erhöhen jedoch die von freien Fettsäuren resultierenden Verluste bei steigendem Gehalt an freien Fettsäuren weit überproportional.

Werden die Öle und Fette vor der Umesterung raffiniert und auf diese Weise von freien Fettsäuren und Schleimstoffen befreit, verliert man die als Seifen abgetrennten freien Fettsäuren und die in den Phospholipiden (Phosphatiden) gebundenen Fettsäuren als mögliche Fettsäureester bildenden Mengen. Darüber hinaus werden bei der Raffination stets unvermeidbar auch Neutralölmengen bei der Abtrennung der Seifen und der Schleilnstoffe mit entfernt und der nachfolgenden Umesterung entzogen.

Um die für Biodiesel einzuhaltenden Grenzwerte für die Gehalte an gebundenem und freiem Glycerin und Phosphor einhalten zu können, kann man die in Ölen enthaltenen Schleimstoffe ferner durch eine relativ einfache Vorbehandlung, das sogenannte "Degununing" abtrennen. Die im Öl gelöst vorhandenen und damit durch Sedimentation nicht abtrennbaren Schleimstoffe werden hierbei mit Wasser (Wasserentschleimung) oder verdünnter, wässriger Säure (saure Entschleimung) in hydratisierte, in Öl nicht lösliche und damit als Niederschlag abtrennbare Schleimstoffe überführt. Bei ihrer Abtrennung wird jedoch stets auch Neutralöl mitgerissen und somit einer nachfolgenden Umesterung entzogen.

Steigt der Gehalt an freien Fettsäuren im eingesetzten Öl oder Fett über einen Gehalt von 2,5 oder gar bis ca. 5 Gew.%, ist erfahrungsgemäß die direkte, alkalische Umesterung mit vertretbarem Aufwand nicht mehr durchführbar. Bei noch höheren Gehalten an freien Fettsäuren im Öl (FFA > 10 Gew. %) hat auch die vorgeschaltete Entsäuerung kaum vertretbare Verluste. Derartig hohe FFA-Gehalte weisen oft Altfette und -öle, wie sie z.B. in Ölabscheidem von Großküchen anfallen, auf. '

Die hier prinzipiell alternativ anwendbare sauer katalysierte Ver- bzw. Umesterung verläuft wesentlich langsamer als die alkalische Umesterung und ist in der Regel verfahrenstechnisch aufwendiger. Bekannt ist ein Verfahren (DE 196 20 523 C1), bei dem zunächst das freie Fettsäuren enthaltende Ö1 mit saurem Glycerin behandelt wird, um die freien Fettsäuren in Mono-, Di- und Triglyceride zu überführen.

Wie im folgenden dargelegt, sind seit den vierziger Jahren des letzten Jahrhunderts fortgesetzt zahlreiche Versuche unternommen worden, die Problematik vorhandener freier Fettsäuren allgemein und für eine nachgeschaltete basenkatalysierten Umesterung zu überwinden. Diese Verfahren sind auch teilweise recht erfolgreich. Die Erfinder der vorliegenden Anmeldung mußten jedoch feststellen, daß das Phospholipidproblem (auch gelegentlich als Phosphatproblem bezeichnet) hierdurch nicht bewältigt werden kann.

In der US 2 415 140 A erfolgt eine Behandlung des rohen Öls (mit z.B. 1,6 % Gehalt an freien Fettsäuren) mit einer Raffinationslösung aus in NaOH gelöstem Glycerin, woraufhin die so von freien Fettsäuren befreite Ölphase zentrifugal abgetrennt wird.

In der US 2 383 601 A werden Öle mit sehr hohen Gehalten an freien Fettsäuren (zwischen 10 und 50 %) so behandelt, daß eine basenkatalysierte Umesterung möglich wird. Dazu wird eine der Umesterung vorgeschaltete, sauer katalysierte Vorveresterung der freien Fettsäuren mit Methanol und konzentrierter Schwefelsäure durchgeführt. Bevorzugt wird der Alkohol überstöchiometrisch mit mindestens mehr als 50% Überschuß gegenüber der stöchiometrischen Menge zur Veresterung der freien Fettsäuren zugesetzt. Bei einer Variante des Verfahrens wird die bei 60 °C vorveresterte Mischung mit Wasser gewaschen, über Natriumsulfat getrocknet und gefiltert, bevor die alkalische Umesterung stattfindet. In einer Verfahrensvariante, in der die saure Vorveresterung und alkalische Umesterung unmittelbar hintereinander erfolgen, werden direkt nach der Vorveresterung Ethanol und Natriummethylat zugesetzt und die Reaktionsmischung wird bei 130 °C und unter Druck, um das Ethanol flüssig zu halten, umgeestert. Nach Abdestillierem von überschüssigem Ethanol wird das Reaktionsprodukt in einen Säuerungsbehälter gegeben, getrocknet und destilliert. Ohne diese zusätzliche Ansäuerung ist es hier nicht möglich, eine Glycerinphase abzutrennen. Die Nachteile sind, daß bei dieser Verfaluensweise eine Waschung mit Wasser, Trocknung und Destillation zur Gewinnung der Fettsäureester erforderlich sind. Durch die Sauerstellung der Glycerinphase werden bei der Destillation zwangsläufig auch Anteile an freien Fettsäuren mit destilliert.

Im US-Patent US 4 164 506 werden große Mengen an Methanol sowohl für die Vorveresterung der freien Fettsäuren als auch als Schleppmittel zugegeben. Nach der Vorveresterungsreaktion wird die von den freien Fettsäuren befreite Ölphase von der Alkoholphase, die darin gelöste Verunreinigungen und den sauren Katalysator enthält, abgetrennt. Ein hinreichender Trenneffekt läßt sich allerdings nur erzielen, wenn beträchtliche Mengen Methanol eingesetzt werden. Die so gewonnene aufgereinigte Ölphase wird basenkatalysiert umgeestert. In der DE 33 195 590 A wird bei einer sauer katalysierten Veresterung freier Fettsäuren ebenfalls ein Schleppmittel verwendet.

Um die Alkoholmenge reduzieren zu können, wurde in der EP 0 127 104 B1 als Schleppmittel Glycerin eingesetzt und die saure Vorveresterung der freien Fettsäuren in Anwesenheit von wasserfreiem, saurem Glycerin und in Gegenwart von Alkohol durchgeführt. Der Zusatz von wasserfreiem, saurem Glycerin hat hier die Aufgabe, als Katalysator zu dienen und gebildetes Reaktionswasser zu binden und bei seiner Abtrennung auszuschleusen (Schleppmittel). Auch hier kann das Glycerin samt saurem Katalysator nach destillativer Entfernung des Alkohols und des Reaktionswassers kreislaufgeführt werden.

Der zurückgewonnene Alkohol kann jedoch nur nach Entfernen des Wassers wieder verwendet werden. Da von den kurzkettigen Alkoholen nur Methanol kein Azeotrop mit Wasser bildet, ist eine einfache, destillative Abtrennung des Wassers nur bei Methanol möglich.

In der EP 0 192 035 B1 ist ausgeführt, daß dieses Verfahren mit einer relativ schwierigen und unbedingt sorgfältig auszuführenden und vollständigen Katalysatorabtrennung mit gleichzeitiger Wasserentfernung durch eine Wäsche des vorveresterten Öls mit Methanol verbunden ist. Außerdem wäre das Verfahren mit Verlusten an Estern der freien Fettsäuren verbunden. Daher schlägt die EP 0 192 035 B1 als Alternative die Verwendung von festen Kationenaustauscherharzen in saurer Form vor, wobei hier das Reaktionswasser nach Abtrennung des Reaktionsgemisches aus dem Austauscherharz zu entfernen ist. In der DE 42 28 476 A wird zur sauren Vorveresterung mit einem stark saurem Ionenaustauscher in einem Festbettreaktor gearbeitet.

In der DE 43 01 686 C wird nach erfolgter Umesterung die Esterphase mit Glycerin, Rohglycerin oder Glycerinphase aus einer vorangegangenen Umesterungsstufe gewaschen, um Wasch- und Prozeßwasser zu vermeiden, und zweistufig umgeestert. Die US 6 013 817 A offenbart ein aufwendiges mehrstufiges alkalisches Umesterungsverfahren, bei dem dem Umesterungsprodukt ebenfalls Glycerinphase zugesetzt wird, bevor die Glycerin- und Esterphasen getrennt werden. Abdestillierter Alkohol wird zurück in den Prozeß geleitet. Die abgetrennte Glycerinphase wird mit Säure neutralisiert und es werden eine organische Phase mit Fettsäuren und Estern und wiederum eine Glycerinphase abgetrennt, die anschließend zur Umesterung dieser organischen Phase ausgenutzt wird.

In der EP 0 131 991 A und der WO 00 75098 A wird demgegenüber die alkalische Glycerinphase aus einer bereits erfolgten Umesterung zur Vorbehandlung eines Rohöles genutzt, um die freien Fettsäuren aus dem Ausgangsöl zu extrahieren und gleichzeitig mit anderen schädlichen Begleitstoffen wie Phosphatiden von dem Ausgangsöl abzutrennen. Die Fettsäuren werden dabei unter Verwendung des bereits zur Umesterung genutzten Katalysators neutralisiert.

Die Erfinder der vorliegenden Anmeldung stellten jedoch fest, daß durch diese Verfahrensweise zwar die freien Fettsäuren auf wirtschaftliche Weise beseitigt werden können, der Phosphatidgehalt bzw. Phosphorgehalt jedoch in der Regel nicht unter den für Biodiesel zulässigen Grenzwert gesenkt werden kann.

Der vorliegenden Erfindung liegt die Aufgabe zu Grunde, ein möglichst einfaches und kostengünstiges Verfahren der eingangs erwähnten Gattung anzugeben, mit dem es gelingt, den Phosphorgehalt der rohen Ausgangsöle und -fette in erforderlichem Ausmaß herab zu senken.

Diese Aufgabe wird durch den Gegenstand des Anspruchs 1 gelöst. Vorteilhafte Weiterbildungen sind in den Unteransprüchen definiert.

In der nun folgenden Erläuterung der Erfindung wird auf die Zeichnungen Bezug genommen, in denen
FIG. eine mögliche zweistufige alkalische Umesterung zeigt, die in der Erfindung anwendbar ist,
FIG.2 eine saure Vorveresterung nach einem Ausführungsbeispiel der Erfindung zeigt, bei dem eine erfindungsgemäße Waschung des Reaktionsproduktes der sauren Vorveresterung stattfindet, und
FIG.3 eine Modifikation der Vorveresterung mit Rückführung von Fettsäuren (Spaltfettsäuren) zeigt, die aus den im Glycerin vorhandenen Seifen durch Säure freigesetzt werden.

Erfindungsgemäß gelingt es, ein einfaches und kostengünstiges Verfahren zu schaffen, bei dem trotz Anwesenheit von Schleimstoffen (Phospholipiden bzw. Lecithinen) im Ausgangsöl auch die freien Fettsäuren ohne Verlust an Neutralöl und nahezu quantitativ in Fettsäureester überführt werden können.

Das Verfahren erfordert keine gesonderte Abtremung von Reaktionswasser aus der Vorveresterung der freien Fettsäuren und vermeidet den Einsatz eines Schleppmittels. Das Verfahren versagt selbst dann nicht, wenn von minderwertigen Ölen mit Gehalten an freien Fettsäuren bis zu etwa 20 Gew.% und Schleimstoffen ausgegangen wird, die ansonsten mit vertretbarem Aufwand nicht zu verwertbarem Bio-Diesel mit zulässigem Phosphorgehalt umgeestert werden könnten.

Hierzu wird zunächst die Ausgangssubstanz (Ausgangsöl oder Ausgangsfett) mit einer relativ geringen, zumindest der stöchiometrisch notwendigen Menge an wasserfreiem Alkohol (primärem und/oder sekundären Alkohol), wie sie zur vollständigen Esterbildung der in der Ausgangssubstanz enthaltenen freien Fettsäuren notwendig ist, versetzt. Maximal beträgt dabei der Alkohol-Überschuß im Vergleich zum stöchiometrisch erforderlichen Wert für die Umsetzung der freien Fettsäuren vorzugsweise 50%. Selbst bei einem Gehalt an freien Fettsäuren von über 20 Gew.% liegt die zugegebene Alkoholmenge damit immer noch unter 10 Gew.% bezogen aus das Ausgangsöl bzw. -fett. Dieser Wert liegt deutlich auch noch unter dem Wert, den man bei dem oben dargelegten Einsatz von Glycerin bzw. Methanol als Schleppmittel eingesetzt hat.

So wird im US Patent 4 164 506 bereits für die saure Vorveresterung mit Alkoholmengen gearbeitet, die stets deutlich über der Löslichkeit des Alkohols im Fett liegen. Bei Methanol liegt diese Löslichkeit bei 50 °C zwischen 12 und 15 Gew.%. Es wird nach dem US Patent 4 164 506 ferner bevorzugt mit gegenüber der Löslichkeitsmenge deutlich erhöhtem Alkoholzusatz und zwar mit 20 bis 30 Gew. % Alkohol bezogen auf das Fett gearbeitet und noch weiteres Methanol als Schleppmittel für das während der Reaktion erzeugte Wasser zugegeben. Schließlich wird vor der Umesterung die Alkoholphase mit dem sauren Katalysator und den abgetrennten Verunreinigungen von der so gereinigten Ölphase getrennt. Aufgrund des hohen Methanolgehaltes ist die Alkoholphase stets als Oberphase abtrennbar.

In der vorliegenden Anmeldung hingegen werden Verunreinigungen mit der Glycerinphase ausgeschleust und zwar entweder mit der Waschglycerinphase oder spätestens mit der Glycerinphase des Umesterungsproduktes.

An dieser Stelle sei darauf hingewiesen, daß es bei der vorliegenden Erfindung bei der sauren Vorveresterung bei erhöhtem Gehalt an freien Fettsäuren zur Bildung einer schweren alkoholhaltigen Katalysatorphase, d.h. Katalysatorunterphase kommen kann.

Erfindungsgemäß wird ein stark saurer, hygroskopischer Katalysator wie konzentrierte Schwefelsäure, p-Toluolsulfonsäure oder dergleichen in bezogen auf das Öl üblicher, auf die zugesetzte Alkoholmenge jedoch erhöhter Menge von maximal 100 Gew.% und bevorzugt 5 Gew.% bis 25 Gew.% bezogen auf den zugesetzten Alkohol zugegeben. Bezogen auf die im eingesetzten Öl oder Fett enthaltenen freien Fettsäuren wird der saure Katalysator vorzugsweise im Gewichtsverhältnis Katalysator zu freien Fettsäuren von 0,1 1 bis zu 1 zugegeben. Die freien Fettsäuren werden anschließend säurekatalysiert bei erhöhter Temperatur z.B. der Siedetemperatur des Alkohols zu Estern umgesetzt. Grundsätzlich empfiehlt sich hier ein moderater Temperaturbereich zwischen 30 °C und der Siedetemperatur des jeweiligen Alkohols (bei Methanol etwa 70 °C), um eine abtrennbare Glycerinphase zu gewinnen. Dabei ist zu berücksichtigen, daß die erforderliche Zeit für die Vorveresterung bei niedriger Temperatur im allgemeinen beträchtlich ist (vgl. z.B. US 2 383 601 A). Erfindungsgemäß wird ferner bevorzugt bei Normaldruck gearbeitet, wobei man hier bei erhöhter Temperatur zwischen 1 und 4 Stunden für die Vorveresterung benötigte. Vorzugsweise wird unter den gegebenen Bedingungen so lange verestert, bis eine zur Entfernung des zugesetzten sauren Katalysators mit Wasser mehrfach gewaschene Probe eine Säurezahl < 1,5 (Gehalt an freien Fettsäuren < 1Gew.%) aufweist. Die Reaktionszeit hierfür beträgt je nach Gehalt an freien Fettsäuren und Reaktionstemperatur zwischen einer halben und drei Stunden. Nach dieser Zeit sind auch dünnschichtchromatographisch keine freien Fettsäuren im Fettsäureester/Ölgemisch mehr erkennbar. Auch hat sich der Gehalt an Mono- und Diglyceriden nicht nennenswert erhöht. Freies Glycerin ist nicht entstanden.

Bei der aufgezeigten Reaktionsführung ist somit sichergestellt, daß die glyceridisch gebunden vorliegenden Fettsäuren der Ausgangssubstanz praktisch unverändert bleiben. Durch den gleichzeitigen Zusatz von Alkohol und saurem Katalysator ist bis zum Siedepunkt des Alkohols bei Normaldruck die Unversehrtheit der glyceridisch gebundenen Fettsäuren offensichtlich sichergestellt. Es findet auch keine Anlagerung der Säure an die Doppelbindungen ungesättigter Fettsäuren, die stets in Ölen vorhanden sind, in Anwesenheit von Alkohol nicht, zumindest nicht in die Reaktion störendem und die Ausbeute senkendem Maße statt.

Überraschenderweise wird durch die saure Vorbehandlung des rohen Öls oder Fettes bei der sauer katalysierten Veresterung der freien Fettsäuren die emulsionsbildende Eigenschaft der im Öl vorhandenen Schleimstoffe zerstört, zumindest jedoch auf ein unbedeutendes Maß reduziert. Die Schleimstoffe können bei oder nach der sauren Veresterung der freien Fettsäuren zumindest teilweise z.B. beim Abkühlen des Reaktionsgemisches auf Raumtemperatur als abtrennbare, z.B. filtrierbare Flocken ausfallen.

Das erfindungsgemäße Verfahren beinhaltet ein Verarbeitungsfenster, bei dem das bei der Veresterung der freien Fettsäuren gebildete Wasser vom zugesetzten hygroskopischen, sauren Katalysator z.B. durch Hydratation der Veresterungsreaktion entzogen wird, und nicht mit Methanol gestrippt, geschleppt oder ausgeschleust wird. Gleichzeitig wird die Fähigkeit des Katalysators, sich chemisch an die Doppelbindungen ungesättigter Fettsäuren zu binden, zerstört. Ausreichend erhalten bleibt jedoch die Eigenschaft des sauren, vermutlich mit Reaktionswasser und/oder Alkohol assoziierten Katalysators, die emulsionsbildende Eigenschaft von Schleimstoffen zu zerstören. Allem Anschein nach werden sogar die in den Schleimstoffen gebundenen Fettsäuren bei der erfindungsgemäßen Vorgehensweise zu Fettsäureestern umgesetzt. Der in ihnen gebundene Phosphor wird dabei mit der Waschglycerinphase und spätestens mit dem gebildeten Glycerin der Umesterungsstufe ausgeschleust.

So haben Untersuchungen der gebildeten Esterphase gezeigt, daß diese frei von phosphorhaltigen Verbindungen ist, die Glycerinphase dagegen enthält Phosphor in gelöster Form (dieser war nach entsprechender Vorbehandlung, z.B. Veraschen in Anwesenheit von Magnesiumoxid nachweisbar).

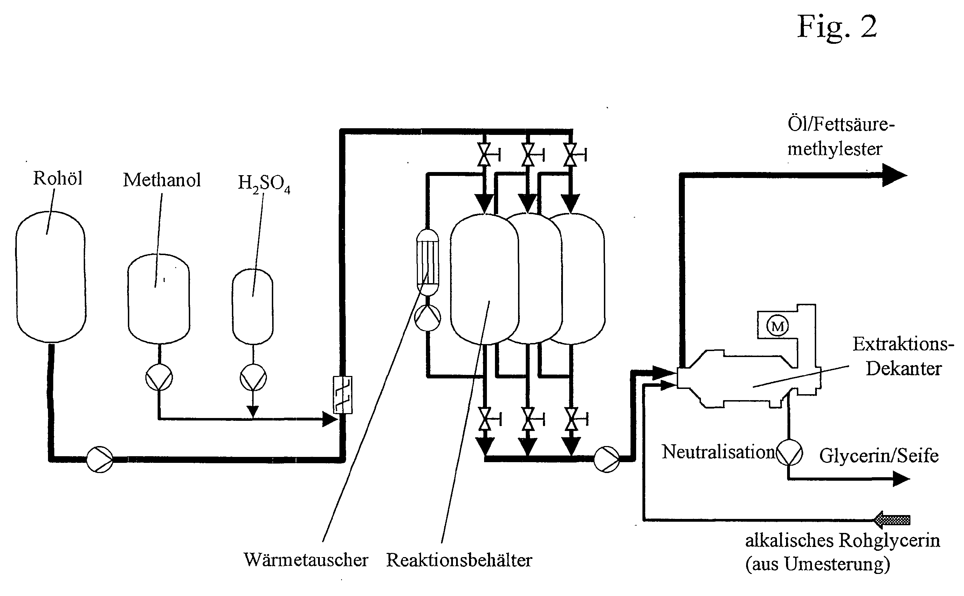

In FIG.2 sind für die Vorveresterung eine Mischstufe und drei auf die erforderliche erhöhte Temperatur bringbare Reaktionsbehälter mit einem Wärmetauscher vorgesehen. Dies hat den Vorteil, daß die Vorveresterung zwar batchweise in den drei Reaktionsbehältern durchgeführt wird, die Waschung mit dem Dekanter jedoch kontinuierlich mit hohem Durchsatz erfolgen kann.

Erfindungsgemäß wird die bei einer bereits erfolgten alkalischen Umesterung gebildete Glycerinphase zur Neutralisation des Reaktionsprodukts der sauren Veresterungsstufe genutzt. Im Stand der Technik wird diese Glycerinphase hingegen zum Waschen des Ausgangsöls oder zum Waschen des Reaktionsproduktes der Umesterung ausgenutzt.

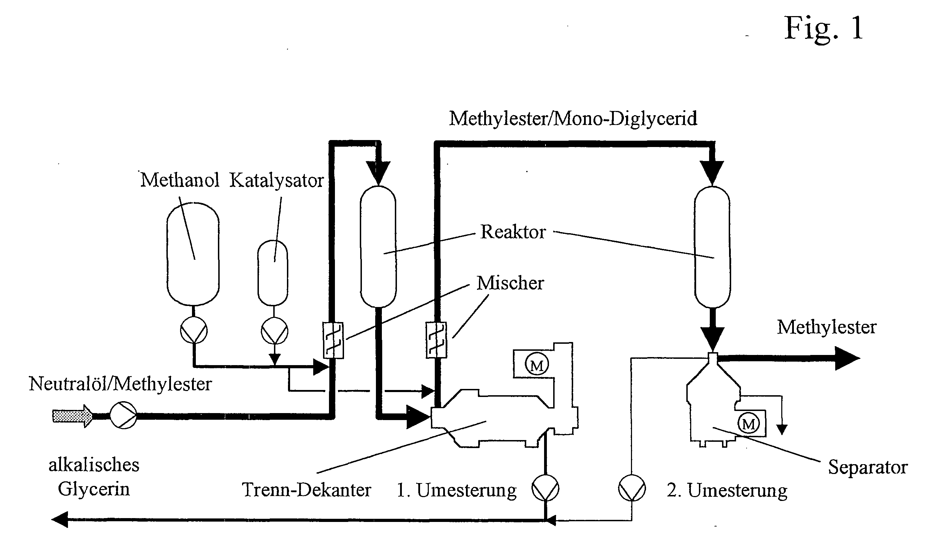

Erfindungsgemäß wird somit erst nach Abschluss der sauren Veresterungsreaktion das entstandene Reaktionsgemisch vor der alkalischen Umesterung mit der aus einer vorausgegangenen alkalischen Umesterung (FIG.1) stammenden alkalischen Glycerinphase gewaschen. Eine sorgfältige Abtrennung des aus der basischen Umesterung stammenden Esters von der Glycerinphase ist nicht notwendig, da der Ester im Reaktionsgemisch verbleibt. Die Abtrennung der Wasch-Glycerinphase kann dann durch Dekantieren oder vorteilhafter durch Zentifugieren erfolgen, da die Glycerinphase nicht in der Esterphase löslich ist. Auch hier stören in der Neutralöl/Esterphase enthaltene Restmengen an Waschglycerin nicht. Die auszuschleusende schwere Glycerinunterphase sollte jedoch möglichst frei von Ester und Öl sein. Zu diesem Zweck wird bevorzugt ein Extraktion-Dekanter eingesetzt, d.h. eine Volhnantel-Schneckenzentrifuge, in der die Glycerinphase sich besonders gut von der übrigen flüssigen Phase abtrennen läßt (FIG.2). Der Dekanter, dem die alkalische Glycerinphase und das Reaktionsprodukt der sauren Vorveresterung zugeführt werden, dient gleichzeitig als Wasch- und Trennvorrichtung, so daß das Verfahren trotz Zwischenschaltung des Wasch-Schrittes sehr effektiv durchführbar ist.

Da die alkalische Glycerinphase praktisch die Gesamtmenge an basischem Katalysator enthält, kann so die gesamte Menge an basischen Katalysator nach der alkalischen Umesterung für die Neutralisation genutzt werden. Die insgesamt benötigte basische Katalysatormenge läßt sich auf diese Weise erheblich reduzieren. Weiterhin kann die aus der Umesterung stammende Glycerinmenge zumindest teilweise Reaktionswasser der sauren Veresterung binden und ausschleusen. Durch geeignete Wahl des Verhältnisses von saurem zu basischen Katalysator läßt sich der PH-Wert der ausgeschleusten Glycerinphase steuern und somit die Gewinnung des Glycerins erleichtern. Hierzu wird man in der Regel die Ausbildung eines basischen PH-Werts bevorzugen und die ausgeschleuste Glycerinphase entsprechend einstellen.

Erfindungsgemäß kann die Glycerinphase aus der folgenden Umesterung ohne eine Aufbereitung im Waschschritt eingesetzt werden und ohne saubere Abtrennung wieder ausgeschleust werden. Reste der Waschglycerinphase stören die folgende alkalische Umesterung nicht. Dies steht ganz im Gegensatz zu dem Glycerinschleppmittel im weiter oben aufgezeigten Stand der Technik, da dort die katalysatorhaltige Schleppmittelphase zuverlässig abgetrennt werden mußte. Um eine saubere Abtrennung zu ermöglichen, waren dabei relativ hohe Methanolmengen erforderlich.

Man sollte bei der ansonsten unkritischen Abtrennung der Waschglycerinphase vor der Umesterung jedoch darauf achten, daß keine Ester mit ausgeschleust werden.

Das Zwischenprodukt in Form des gewaschenen Gemisches von unverändert gebliebenen Fettsäureglyceriden und den gebildeten Fettsäureestern wird dann alkalisch katalysiert umgeestert. Hierzu wird basischer Katalysator z.B. Alkali-Hydroxid oder ein Alkoholat, vorzugsweise des eingesetzten Alkohols, direkt zugegeben. Der alkalische Katalysator bewirkt die alkalische Umesterung, d.h. Umesterung der glyceridisch gebundenen Fettsäuren in Fettsäureester. Die in der sauren Prozeßstufe aus den freien Fettsäuren gebildeten Ester nehmen an der Reaktion nicht Teil.

Das bei der sauerkatalysierten Veresterung der freien Fettsäuren gebildete und durch die Waschung nicht vollständig abgetrennte Wasser stört die alkalisch katalysierte Umesterung der Fettsäuretri-, -di- und -monoglyceride zu Fettsäureestern der primären (und sekundären) Alkohole nicht.

Gemäß FIG. wird die alkalische Umesterung zweistufig durchgeführt, wobei nach der ersten Umesterungsstufe mit einem Trenn-Dekanter (Vollmantenschneckenzentrifuge) der Methylester und noch vorhandene Mono- und Diglyceride vom alkalischen Glycerin abgetrennt werden. Die Trennung in Methylester und alkalisches Glycerin erfolgt nach der zweiten Umesterungstufe z.B. in einem Separator. In der Zeichnung sind des weiteren die erforderlichen Mischstufen gezeigt.

Das nach dem erfindungsgemäßem Verfahren gebildete Fettsäureestergemisch kann, vorteilhaft nach Zerstörung des basischen Katalysators durch Neutralisation, z.B. durch Zugabe stöchiometrischer Säuremengen oder durch Zusatz entsprechender Mengen an saurem, nicht esterlöslichen Adsorbens z.B. in Form von sauren Bleicherden von den eventuell vorhandenen Überschußmengen an Alkohol durch Abdestillation des Alkohols und Filtration zur Abtrennung des zugegebenen Adsorbens gereinigt werden. Eventuell vorhandene, im Rohester gelöste Restmengen an Glycerin werden bei dieser Reinigungsoperation mit entfernt.

Ein anderer bzw. zusätzlicher Weg, das rohe Estergemisch zu reinigen, besteht in der Waschung des Gemisches mit Wasser. Auch hierdurch lassen sich Restmengen an Salzen, Katalysator, Alkohol und Glycerin vollständig entfernen. Störende Emulsionsbildung wurde bei erfindungsgemäßer Durchführung der Veresterung nicht beobachtet.

Zur Reindarstellung der Fettsäureester können die rohen Fettsäureester selbst einer Destillation (vorzugsweise einer Vakuumdestillation) unterzogen werden. Hierbei können sie von Wachsen und anderen esterlöslichen Öl- bzw. Fettbegleitstoffen befreit werden.

Für die Verwendung als Bio-Diesel ist dies in der Regel jedoch nicht nötig.

Mit dem erfindungsgemäßen Verfahren gelang es, den Phosphorgehalt in den gewonnenen Estern drastisch zu senken. So wurde beispielsweise der Phophorgehalt von 175 mg/kg Ausgangsöl auf weniger als 1 mg/kg im erzeugten Biodiesel gesenkt.

Die gewinnbare Fettsäureestermenge bezogen auf die im eingesetzten Öl gebundenen Fettsäuren und den Gehalt an im Öl enthaltenen freien Fettsäuren ist im erfindungsgemäßen Verfahren nahezu quantitativ.

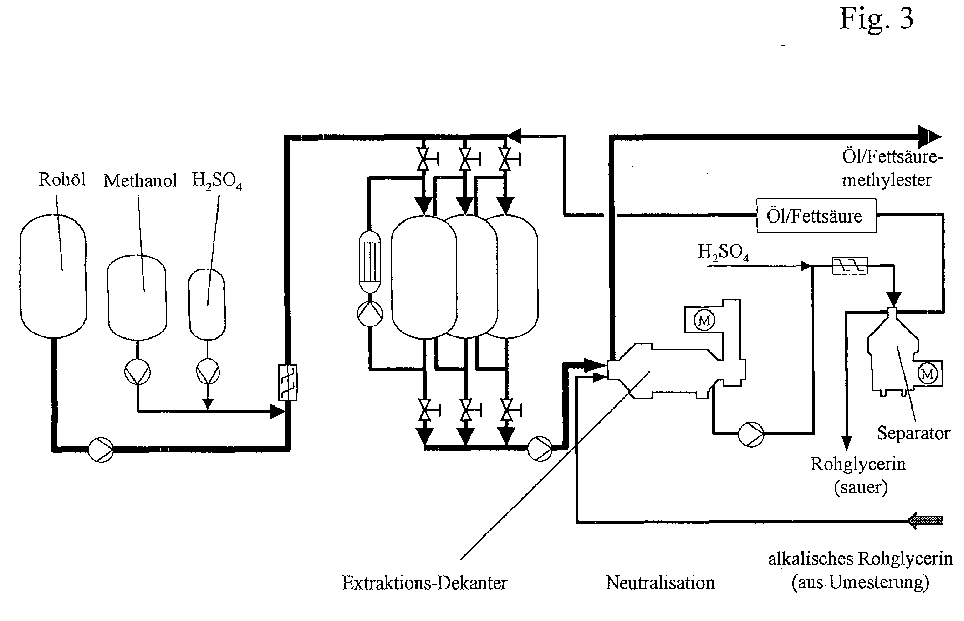

Eine vorteilhafte Weiterbildung des erfindungsgemäßen Verfahrens (FIG.3) besteht darin, das als Waschglycerin genutzte Reaktionsglycerin der alkalischen Umesterung nach der Waschung sauer zu stellen und so aus den im Glycerin enthaltenen Seifen die freien Fettsäuren freizusetzen und mit mitgerissenen Neutralölen abzutrennen. Dies geschieht bevorzugt unter Verwendung einer Zentrifuge, in der eine abtrennbare flüssige leichte Oberphase, die Fettsäuren und mitgerissenes Neutralöl enthält, gewonnen wird. In FIG.3 wird Schwefelsäure zum Ansäuern der im Extraktions-Dekanter abgetrennten Glycerin-Seifenphase benutzt, die hierzu einem Mischer zugeführt wird. In einem Separator wird die leichte "Oberphase" vom saurem Rohglycerin abgetrennt und direkt in die saure Vorveresterung des Öls zurückgeführt. Auf diese Weise gelingt es, auch die bei der alkalischen Umesterung durch Teilverseifung mit der Glycerinphase als Seifen ausgeschleusten Fettsäuren und Neutralöle zu Methylester umzuwandeln und so mit anderen Worten die Ausbeute auf den maximal möglichen Wert zu treiben.

### Beispiel:

Vorbereitung eines Ausgangsöls
A. Soapstock aus der Raffination von nativem Sonnenblumenpressöl und die gleiche Menge an bei der Raffination abgetrennten Schleimstoffen wurden mit wässriger Mineralsäure in üblicherweise zu Spaltfettsäure umgesetzt, von der sauren, Überschußmengen an Mineralsäure enthaltenden wässrigen Phase getrennt, mit der gleichen Menge an bei der Raffination abgetrennten Schleimstoffphase versetzt und die so erhaltene Mischung aus Spaltfettsäuren, Schleimstoffen und mitgerissenem Neutralöl getrocknet.
B. 95 g natives High-Oleic-Sonnenblumenöl mit einer Säurezahl von 3 wurden mit 10,5g der unter A hergestellten Mischung versetzt. Das so erzeugte Gemisch hatte eine Säurezahl > 10.

### Anwendung des Verfahrens

a. 500g dieser Mischung wurden auf 58°C erwärmt und mit einer Mischung aus 2,1 g konzentrierter Schwefelsäure und 10g Methanol (technisch, wasserfrei) versetzt. Weitere 35,5g Methanol wurden nach einigen Minuten hinzugefügt. Insgesamt wurde für die saure Veresterung mit 45,5g weniger Methanol hinzugefügt, als für die Umwandlung aller freien und gebundenen Fettsäuren in Fettsäureester benötigt wird. In Zeitabständen gezogene Proben zeigten eine schnell abnehmende Säurezahl. Nach 2 Stunden Reaktionszeit war die Säurezahl auf 1,5 entsprechend dem FFA-Gehalt von < 1 Gew.% gesunken.
   Zur Beurteilung des durchgeführten Verfahrens bezüglich des Verhaltens der Glyceride wurden weitere 25,7g Methanol zugegeben und eine weitere Stunde bei 58 °C gerührt. Mit 71,2g war nun mehr Methanol im Reaktionsgemisch vorhanden als für die Umwandlung aller freien und gebundenen Fettsäuren in Fettsäureester benötigt wird. Eine Abscheidung von Glycerin konnte nicht beobachtet werden.
   Zu der unter a. erzeugten Reaktionslösung wurde eine aus einer bereits durchgeführten basischen Umesterung abgetrennte Glycerinphase in einer solchen Menge unter intensivem Vermischen hinzugegeben, daß eine Probe im wässrigen Auszug einen PH-Wert von ca. 7 zeigte. Insgesamt wurden hierzu 36,7g basische Glycerinphase benötigt. Das Waschglycerin wurde in einem Scheidetrichter als schwere Phase von der Esterphase getrennt und abgezogen. Das Waschglycerin zeigte beim Verdünnen mit Wasser weder Emulsionsneigung, noch schied sich eine leichtere organische Oberphase ab. Es war danach frei von Fettsäureestern und in basisch wässriger Phase nicht löslichen Schleimstoffen.
b. Die von der Wasch-Glycerinphase abgetrennte Öl/Esterphase wurde mit 17g 30 Gew.%iger Natriummethylat/Methanol-Lösung versetzt und 30 Minuten bei ca.60°C unter Rühren gehalten. Danach wurde das Reaktionsgemisch zur Abtrennung des gebildeten Glycerins in einen Scheidetrichter überführt. Es schieden sich 104g basische Glycerinphase ab. Diese Glycerinphase konnte für weitere Verfahrensdurchführungen direkt zur Waschung der sauren Veresterungphase nach Schritt a. verwendet werden. Das Dünnschichtchromatogramm der Esterphase zeigte keine Mono-, Di- und/oder Triglyceride und nur Fettsäuremethylester.

Im Technikumsversuch wurden dieses und weitere Beispiele mit entsprechend höheren Mengen und den in den Figuren skizzierten Apparaturen nachgestellt. So wurden rohe High-Oleic Sonnenblumenöle, normales Sonnenblumenöl und Rapsöl mit Säurezahlen von über 3 bis zu etwa 40 (entsprechend einem FFA-Gehalt von 20) bei gleichzeitiger Entschleimung erfolgreich umgeestert.

## Patentansprüche

1. Verfahren zum Herstellen von Fettsäureestern primärer und/oder sekundärer Alkohole aus rohen, ungereinigten freie Fettsäuren und Schleimstoffe enthaltenden Ölen oder Fetten oder aus mit freien Fettsäuren beladenen Altölen der Ernährungsindustrie unter Anwendung einer alkalisch katalysierten Umesterung mit Bildung einer abtrennbaren Glycerinphase und einer dieser vorgeschalteten sauer katalysierten Veresterung freier Fettsäuren,
**dadurch gekennzeichnet, daß**
a. zunächst die sauer katalysierten Veresterung der freien Fettsäuren verbunden mit einer weitestgehenden Deaktivierung vorhandener Schleimstoffe hinsichtlich deren nachteiliger emulsionsbildender Eigenschaft **dadurch** erfolgt, daß der Ausgangsubstanz in Form des rohen Öles oder Fettes bzw. Altöles ein wasserfreier primärer und/oder sekundärer Alkohol und ein stark saurer, hygroskopischer Katalysator zugesetzt werden, wobei die zugegebene Menge an wasserfreiem Alkohol mindestens der stöchiometrisch notwendigen Menge für eine vollständige Esterbildung der in der Ausgangssubstanz enthaltenen freien Fettsäuren entspricht,
b. daß das Reaktionsprodukt der sauer katalysierten Veresterung mit dem abgetrennten Glycerin einer bereits durchgeführten alkalischen Umesterung gewaschen wird, und die Waschglycerinphase anschließend abgetrennt wird,
c. daß das so gewaschene Reaktionsprodukt der sauer katalysierten Veresterung der alkalischen katalysierten Umesterung unterzogen wird, indem zu diesem Reaktionsprodukt ein alkalischer Katalysator und die erforderliche Menge Alkohol zur Umesterung der glyceridisch gebundenen Fettsäuren zu Fettsäureestern hinzugegeben wird, und
d. daß die in Schritt c. entstehende Glycerinphase von den in den Schritten a. und c. gebildeten Estern der freien Fettsäuren und der in der Ausgangssubstanz glyceridisch gebunden vorliegenden Fettsäuren abgetrennt wird.

2. Verfahren nach Anspruch 1,
**dadurch gekennzeichnet,**
**daß** ein Alkoholüberschuß gegenüber der stöchiometrischen Menge in Schritt a. maximal 50% beträgt und daß der saure Katalysator bezogen auf den zugesetzten Alkohol mit maximal 100 Gew.%, vorzugsweise 5 bis 25 Gew.%, zugesetzt wird.

3. Verfahren nach Anspruch 1 oder 2,
**dadurch gekennzeichnet,**
**daß** für die oder während der sauer katalysierten Veresterung kein Schleppmittel zugesetzt wird.

4. Verfahren nach einem der vorhergehenden Ansprüche,
**dadurch gekennzeichnet,**
**daß** der Schritt a. der Veresterung der freien Fettsäuren bei erhöhter Temperatur so durchgeführt wird, daß die glyceridisch gebundenen Fettsäuren nach Schritt a. noch unverändert vorliegen.

5. Verfahren nach einem der vorhergehenden Ansprüche,
**dadurch gekennzeichnet,**
**daß** bei der Zugabe von Alkohol in Schritt c. ein Alkoholüberschuß auf 50 % gegenüber der stöchiometrischen Menge für die Umesterung der gebundenen Fettsäuren begrenzt wird.

6. Verfahren nach einem der vorhergehenden Ansprüche,
**dadurch gekennzeichnet,**
**daß** als der wasserfreie Alkohol ausgewählt ist aus kurzkettigen Alkoholen: Methanol, Ethanol, Propanol, Isopropanol, Butanol und/oder Isobutanol.

7. Verfahren nach einem der vorhergehenden Ansprüche,
**dadurch gekennzeichnet,**
**daß** die Abtrennung der Waschglycerinphase zentrifugal, vorzugsweise mit einer kontinuierlich arbeitenden Zentrifuge, insbesondere mit einem Extraktions-Dekanter erfolgt.

8. Verfahren nach einem der vorhergehenden Ansprüche,
**dadurch gekennzeichnet,**
**daß** der wasserfreie Alkohol mit einem Überschuß von 5 % bis 40 % gegenüber der stöchiometrisch erforderlichen Menge in Schritt a. eingesetzt wird.

9. Verfahren nach einem der vorhergehenden Ansprüche,
**dadurch gekennzeichnet,**
**daß** als der saure Katalysator konzentrierte Schwefelsäure oder p-Toluolsulfonsäure eingesetzt werden.

10. Verfahren nach einem der vorhergehenden Ansprüche,
**dadurch gekennzeichnet,**
**daß** der saure Katalysator in einem Gewichtsverhältnis Katalysator zu im eingesetzten Öl oder Fett enthaltenen freien Fettsäuren von 0,1 bis zu 1 zugegeben wird.

11. Verfahren nach einem der vorhergehenden Ansprüche,
**dadurch gekennzeichnet,**
**daß** man die in Schritt d. abgetrennte Glycerinphase ansäuert und anschließend zentrifugal das saure Rohglycerin von einer noch restliche freie Fettsäuren und Neutralöl enthaltenden leichteren Phase trennt, die in die saure Vorveresterungsstufe im Schritt a. zurückgeführt wird.

## Claims

1. Method of producing fatty acid esters of primary and/or secondary alcohols from raw unpurified oils or fats containing free fatty acids and slimy substances or from waste oils loaded with free fatty acids from the food industry, by using alkaline catalysed transesterification with the formation of a separable glycerol phase and acidic catalysed esterification of free fatty acids preceding the transesterification,
**characterized**
a. **in that** first the acidic catalysed esterification of the free fatty acids together with most extensive deactivation of slimy substances that are present is carried out with regard to their disadvantageous emulsion-forming properties in that a water-free primary and/or secondary alcohol and a highly acidic hygroscopic catalyst are added to the starting substance in the form of the raw oil or fat or waste oil, respectively, the amount of water-free alcohol added corresponding at least to the stoichiometrically necessary amount for complete ester formation of the free fatty acids contained in the starting substance,
b. **in that** the reaction product of the acidic catalysed esterification is washed with the separated glycerol of an alkaline transesterification process that has already been carried out and the glycerol wash phase is subsequently separated,
c. **in that** the reaction product of the acidic catalysed esterification, having been washed in this way, is subjected to the alkaline catalysed transesterification whilst an alkaline catalyst and the amount of alcohol required for transesterification of the glyceridically bound fatty acids into fatty acid esters are added to this reaction product, and
d. **in that** the glycerol phase formed in step c. is separated from the esters formed in steps a. and c. of the free fatty acids and of the fatty acids present in glyceridically bound form in the starting substance.

2. Method according to Claim 1, **characterized in that** an alcohol excess relative to the stoichiometric amount in step a. is 50% at most, and **in that** the acidic catalyst is added with 100% by weight at most, preferably 5 to 25% by weight, relative to the added alcohol.

3. Method according to Claim 1 or 2, **characterized in that**, for or during the acidic-catalysed esterification, no entrainer is added.

4. Method according to one of the preceding claims, **characterized in that** step a. of the esterification of the free fatty acids is carried out at increased temperature in such a way that the glyceridically bound fatty acids according to step a. are still present in unchanged form.

5. Method according to one of the preceding claims, **characterized in that** when adding alcohol in step c., an alcohol excess is limited to 50% in relation to the stoichiometric amount for transesterification of the bound fatty esters.

6. Method according to one of the preceding claims, **characterized in that** the water-free alcohol is selected from short-chain alcohols: methanol, ethanol, propanol, isopropanol, butanol and/or isobutanol.

7. Method according to one of the preceding claims, **characterized in that** separation of the glycerol wash phase is carried out centrifugally, preferably by means of a continuously operating centrifuge, in particular an extraction decanter.

8. Method according to one of the preceding claims, **characterized in that** water-free alcohol is added with an excess amount of 5% to 40% relative to the stoichiometrically required amount in step a.

9. Method according to one of the preceding claims, **characterized in that** the acidic catalyst used is concentrated sulphuric acid or p-toluene sulphonic acid.

10. Method according to one of the preceding claims, **characterized in that** the acidic catalyst is added in a weight ratio of 0.1 up to 1 of catalyst to free fatty acids contained in the oil or fat employed.

11. Method according to one of the preceding claims, **characterized in that** the glycerol phase separated in step d. is acidified and the acidic raw glycerol is then separated centrifugally from a lighter phase which still contains residual free fatty acids and neutral oil, and which is returned to the acidic pre-esterification stage in step a.

## Revendications

1. Procédé de production d'esters d'acides gras d'alcools primaires et/ou secondaires à partir d'acides gras libres bruts non purifiés et d'huiles ou de graisses contenant des substances mucilagineuses, ou d'huiles usagées chargées en acides gras libres provenant de l'industrie alimentaire, par application d'une transestérification à catalysation alcaline avec formation d'une phase glycérine séparable et d'une estérification à catalysation acide d'acides gras libres en amont de celle-ci, **caractérisé**
a. **en ce que** l'estérification à catalysation acide des acides gras libres associée à une large désactivation des substances mucilagineuses présentes quant à leur propriété émulsifiante désavantageuse est d'abord obtenue en ce qu'à la substance initiale sous forme d'huile, de graisse ou d'huile usagée brute est ajouté un alcool primaire et/ou secondaire exempt d'eau et un catalyseur hygroscopique fortement acide, la quantité d'alcool exempt d'eau ajoutée correspondant au moins à la teneur stoechiométriquement exigée pour une estérification complète des acides gras libres contenus dans la substance initiale,
b. **en ce que** le produit réactif de l'estérification à catalysation acide est lessivé avec la glycérine séparée d'une transestérification à catalysation alcaline déjà effectuée, et la phase de glycérine lessivée est séparée ensuite;
c. **en ce que** le produit réactif de l'estérification à catalysation acide ainsi lessivé est soumis à la transestérification à catalysation alcaline, en ajoutant au dit produit réactif un catalyseur alcalin et la quantité d'alcool exigée pour la transestérification en esters d'acides gras des acides gras à liaison glycéridique, et
d. **en ce que** la phase de glycérine formée en étape c. est séparée des esters d'acides gras libres formés en étapes a. et c. et des acides gras à liaison glycéridique présents dans la substance initiale.

2. Procédé selon la revendication 1,
**caractérisé**
**en ce que** l'excédent d'alcool par rapport à la teneur stoechiométrique de l'étape a. est au maximum de 50 %, et en ce que le catalyseur acide est ajouté à raison de 100 % en poids maximum, préférentiellement à raison de 5 à 25 % en poids de l'alcool ajouté.

3. Procédé selon la revendication 1 ou la revendication 2,
**caractérisé**
**en ce qu'**aucun solvant n'est ajouté pour l'estérification à catalysation acide, ou pendant celle-ci.

4. Procédé selon l'une des revendications précédentes,
**caractérisé**
**en ce que** l'étape a. d'estérification des acides gras libres est effectuée à température élevée de telle manière que les acides gras à liaison glycéridique restent inchangés après l'étape a.

5. Procédé selon l'une des revendications précédentes,
**caractérisé**
**en ce que** lors de l'ajout d'alcool en étape c., un excédent d'alcool est limité à 50 % de la teneur stoechiométrique pour la transestérification des acides gras à liaison glycéridique.

6. Procédé selon l'une des revendications précédentes,
**caractérisé**
**en ce que** l'alcool exempt d'eau est sélectionné parmi des alcools à chaîne courte : méthanol, éthanol, propanol, isopropanol, butanol et/ou isobutanol.

7. Procédé selon l'une des revendications précédentes,
**caractérisé**
**en ce que** la séparation de la phase de glycérine lessivée est effectuée par centrifugation, de préférence avec une centrifugeuse à fonctionnement continu, en particulier avec un décanteur à extraction.

8. Procédé selon l'une des revendications précédentes,
**caractérisé**
**en ce que** l'alcool exempt d'eau est mis en oeuvre en étape a. avec un excédent de 5 % à 40 % par rapport à la teneur stoechiométriquement exigée.

9. Procédé selon l'une des revendications précédentes,
**caractérisé**
**en ce que** de l'acide sulfurique ou de l'acide p-toluène sulfonique concentrés sont mis en oeuvre comme catalyseurs acides.

10. Procédé selon l'une des revendications précédentes,
**caractérisé**
**en ce que** le catalyseur acide est ajouté suivant un rapport de poids compris entre 0,1 et 1 du catalyseur aux acides gras libres contenus dans l'huile ou la graisse utilisés.

11. Procédé selon l'une des revendications précédentes,
**caractérisé**
**en ce que** la phase de glycérine séparée en étape d. est acidifiée avant de séparer par centrifugation la glycérine brute acide d'une phase légère contenant encore des acides gras libres résiduels et de l'huile neutre, laquelle est recyclée vers la phase de pré-estérification acide de l'étape a.
